# EUROPEAN PATENT APPLICATION

(11) **EP 2 709 018 A1**
(43) Date of publication of application: **19.03.2014**
(21) Application number: 13184317.9
(22) Date of filing: 13.09.2013
(51) Int. Cl.: G06F 12/08, G06F 12/12

(54) **Method of managing main memory**

(30) Priority: 13.09.2012 KR 20120101456
(71) Applicant: Samsung Electronics Co., Ltd, Gyeonggi-do 443-742 (KR)
(72) Inventor: Shin, Hee-Sub, Shin, Hee-Sub, 443-742 Gyeonggi-do (KR)
(74) Representative: Nederlandsch Octrooibureau

(57) **Abstract**

A method of managing a memory is provided that can quickly secure an available space. The method includes recording a compression ratio of data stored in a page of a main memory, and securing space of the main memory when the main memory has insufficient available space, by compressing data of at least one page among pages of the main memory, wherein the at least one page has a compression ratio of a standard value or greater and storing the compressed data in the main memory.

## Description

### BACKGROUND OF THE INVENTION

### Field of the Invention:

The present invention relates to a method of managing a memory. More particularly, the present invention relates to a method of managing a memory that can quickly secure an available space.

### Description of the Related Art:

In order to secure an available space of a main memory, data is moved from a main memory and stored in an auxiliary memory such as a hard disk, and when the stored data is requested, the data is loaded from the auxiliary memory to the main memory. The process of loading data from the auxiliary memory to the main memory process is controlled by an operating system and is referred to as page swapping.

Through the page swapping, when an available space of the main memory is insufficient, data of a page which is not frequently accessed (e.g., data having a low access frequency), is exported to the auxiliary memory, and data is stored on the page from which the first data has been exported.

When the operating system exports the data of a corresponding page to the auxiliary memory, the operating system modifies a page table entry of the corresponding page among page table entries of a translation table used when converting a virtual address to a physical address, and records an indication that data of the corresponding page is moved to the auxiliary memory.

Therefore, when the corresponding page is accessed afterwards, the operating system recognizes that the data has been moved to the auxiliary memory and imports the data from the auxiliary memory.

However, in general, a hard disk used as the auxiliary memory has a low reaction speed due to limitations associated with physical characteristics of the hard disk. A hard disk device having a rotating platter and a moving head requires a long time to rotate the platter and to move the head to a position to performing recording. Therefore, if a hard disk is used as a space for page swapping, in order to record data of a small page on the swapping space, a system should standby for a long time, thereby decreasing the performance of the overall system.

In order to solve the problem as described above, a compressed page swapping technique of compressing data of the main memory and securing an available space has been developed.

According to the related art, the compressed page swapping technique selects a page having a low access frequency among pages of the main memory as an object for swapping, and compresses data of the selected page. In addition, if sizes of data before and after compression are compared and a compression ratio is high, then the data is stored in the main memory. However, if the size of the data after compression is bigger than the size of the data before compression or the compression gain is below a predetermined value, then the data is exported to and stored in an auxiliary memory.

Because most pages existing on the memory are comparatively well compressed, a memory space may be easily secured in an amount of the gain obtained by the compression. Further, because unnecessary disk access decreases, performance degradation owing to the page swapping may be reduced.

However, the compressed page swapping technique is accompanied by processing overhead owing to performance of the compression. The page to be compressed is selected according to an importance calculated only by the access frequency of the page, and the gain which is generated by the performance of the compression may not be known until the compression is actually performed. Therefore, a case in which the compression is performed with a small gain may exist. For example, by performing unnecessary compression with respect to pages that are not well compressed, unnecessary operations are performed, which thereby increases a processing time. In addition, an unnecessary operation when an available space of the main memory is to be secured may delay the securing of the available space of the main memory, thereby degrading the performance of the system.

Therefore, a need exists for an apparatus and a method of managing a memory that can quickly secure an available space of a main memory.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a method of managing a memory that can quickly secure an available space of a main memory.

Another aspect of the present invention is to provide a method of managing a memory that can secure an available space of the main memory by quickly selecting a page to be swapped without a process of determining a page to be swapped according to the compression result.

In accordance with an aspect of the present invention, a method of managing a memory is provided. The method includes recording a compression ratio of data stored in a page of a main memory, and securing space of the main memory when the main memory has insufficient available space, by compressing data of one or more page among pages of the main memory, wherein the at least one page has a compression ratio of a standard value or greater and storing the compressed data in the main memory. A standard value can be a predetermined value, for example a predetermined threshold ratio, e.g. 25%, 50%, 75%. In this way, a method of managing a memory is provided that can quickly secure an available space of a main memory.

In accordance with another aspect of the present invention, a method of managing a memory is provided. The method includes detecting and storing a compression ratio of the restored data when data, in which page swapping is generated, is restored to the main memory, and securing space of the main memory by selecting a page having a compression ratio of a standard value or greater from pages of the main memory as an object for page swapping when the main memory has insufficient available space for recording data.

An aspect of the present invention is to provide a method of managing a memory that can secure an available space of the main memory by quickly selecting a page to be swapped without a process of determining a page to be swapped according to the compression result.

Another aspect of the present invention is to provide a method of managing a memory to have an effect of omitting a step of trying compression with respect to a page in which data with a low compression ratio is stored and an effect of more quickly securing an available space of a memory by selecting only pages in which data having high compression ratio is stored as pages to be swapped.

The invention further provides a device, such as a computer device, configured to implement a method as described in the summary of the invention, the exemplary embodiments, or the attached claims. The invention also provides a computer program medium comprising computer program instructions, such as an Operating System product, implementing a method as described in the summary of the invention, the exemplary embodiments, or the attached claims. Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 is a flowchart illustrating a method of recording a compression ratio of data stored in a page of a main memory according to an exemplary embodiment of the present invention;
FIG. 2 is a diagram illustrating an address translation process in a page method according to an exemplary embodiment of the present invention;
FIG. 3 is a diagram illustrating an operation of accessing a physical memory based on a translation table according to an exemplary embodiment of the present invention;
FIGS. 4A and 4B are diagrams illustrating a page table entry that configures a second level translation table according to an exemplary embodiment of the present invention;
FIG. 5 is a diagram illustrating an operation of mapping data to corresponding positions to be stored based on values configured in a page table entry of a second level translation table according to an exemplary embodiment of the present invention;
FIGS. 6A and 6B are diagrams illustrating a page information data structure according to an exemplary embodiment of the present invention;
FIG. 7 is a flowchart illustrating a process of reconfiguring compression ratio information in a corresponding page in which write protection is configured for compression ratio record display according to an exemplary embodiment of the present invention;
FIG. 8 is a flowchart illustrating a process of selecting an object for page swapping in order to secure an available space in a main memory according to an exemplary embodiment of the present invention; and
FIGS. 9A and 9B are diagrams illustrating a list presenting pages of a main memory according to an access frequency according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

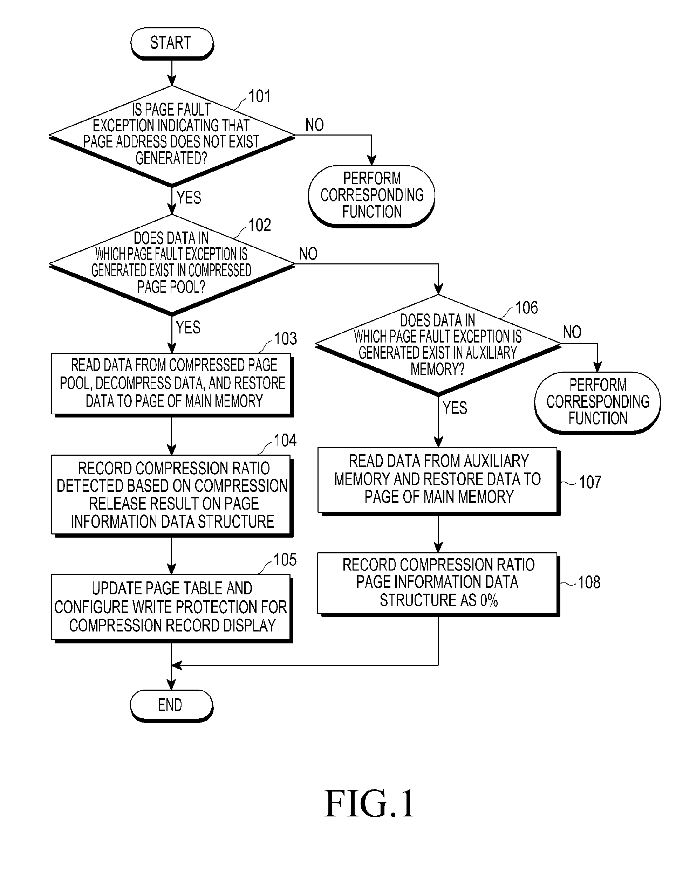

Referring to FIG. 1, if a page fault exception indicating that the physical address (e.g., a page address of the main memory does not exist in a specific page table entry of the translation table) is generated while performing a virtual address translation by translating a virtual address to a physical address using a translation table in order to assign a page of the main memory to a corresponding processor, then a Central Processing Unit (CPU) detects the generation of the page fault exception in step 101 and informs an operating system of the generation of the page fault exception.

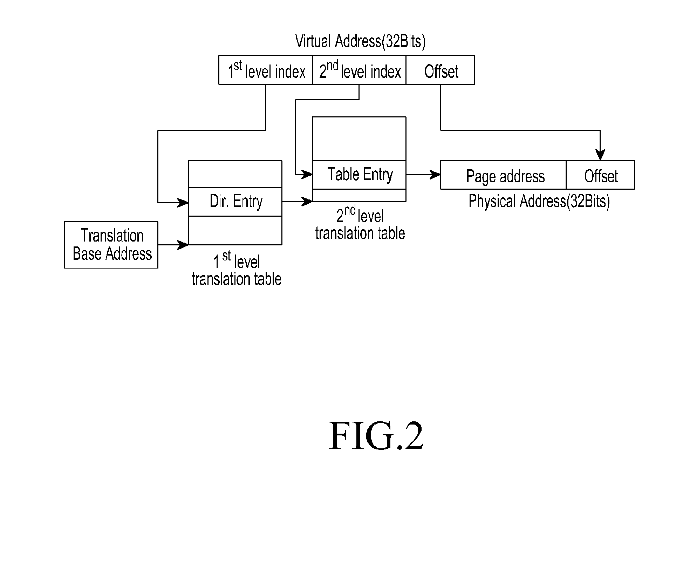

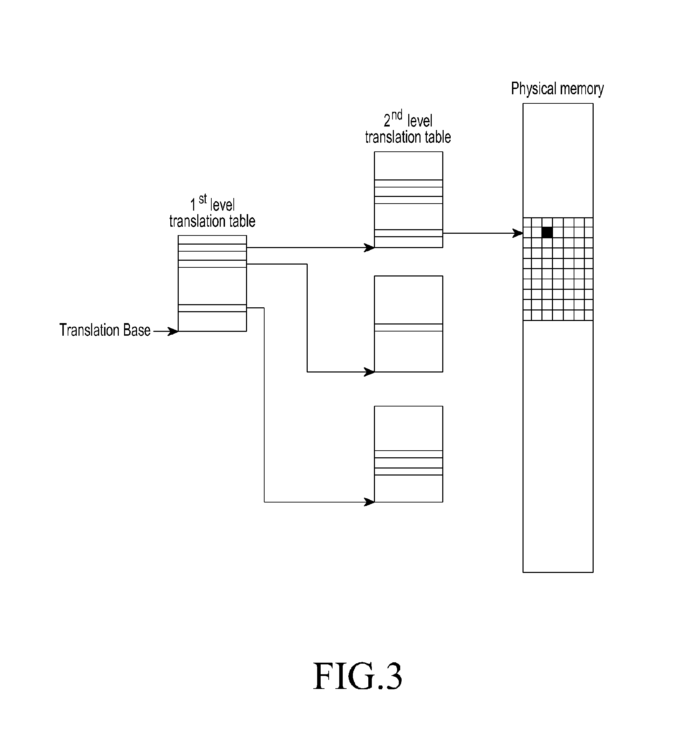

With reference to FIGS. 2 and 3, an operation of performing the address translation is described as follows. First, in FIG. 2, the translation base address refers to a first level translation table of a corresponding process.

A 32-bit virtual address included in the corresponding processor is divided into three parts of a first level index, a second level index, and an offset, and each of the first level index and the second level index is converted by the first level translation table and the second level translation table to finally obtain a 32-bit physical address.

FIG. 3 is a diagram illustrating an operation of accessing a corresponding page of the physical memory. For example, FIG. 3 illustrates an operation of accessing a corresponding page of the main memory by translating a virtual address to a physical address based on the translation table as illustrated in FIG. 2.

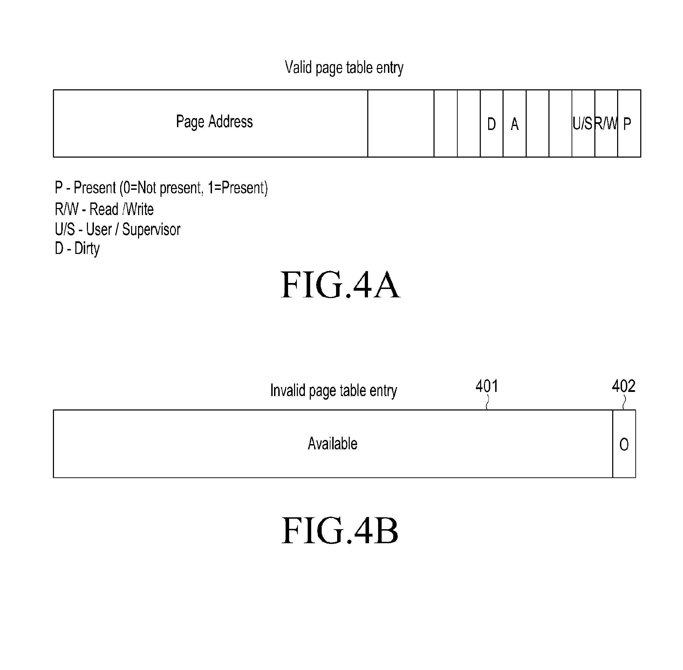

The second level translation table is configured with a page table entry as illustrated in FIGS. 4A and 4B.

Referring to FIG. 4A, the page table entry includes a plurality of fields. For example, as illustrated in FIG. 4A, the page table entry includes a page address field among the plurality of fields. The page address field refers to an address of a page frame of a main memory. An address of the page frame is combined with an offset of a virtual address to form one complete physical address. In addition, a Read/Write (R/W) field refers to an authority to access (e.g., read or write) a corresponding page. A User/Supervisor (U/S) field refers to a current mode of a processor which is to access a page. The mode of a processor may be divided into a supervisor mode or a user mode. The mode of a processor becomes a supervisor mode when a processor performs an operation by an operating system. If a processor in a user mode is to access a page in which a U/S field is set as S, an exception indicating an authorization error may be generated.

In addition, a Present (P) field is configured to indicate whether a current page table entry records an address of a page frame in a main memory. For example, if an address of a page frame in a main memory is recorded in a page address field of a current page table entry, the P field is set as "1".

However, if an address of a page frame in a main memory is not recorded in the current page table entry, then the P field is set as "0." For example, if data of a page which a processor is to access is not stored in a corresponding page in the main memory and paged out, and the data is moved and stored to a compressed page in an auxiliary memory or the main memory, then the P field is set as "0". Referring to FIG. 4B, when a P field 402 is set as "0", the page table entry includes an available field 401 and the P field 402. The available field 401 may store information on a storage position at which corresponding data is stored. For example, the available field 401 may store information on a position at which the data is stored in the auxiliary memory, or information on a position at which the data is compressed and stored in a compressed page pool which is a certain region of the main memory.

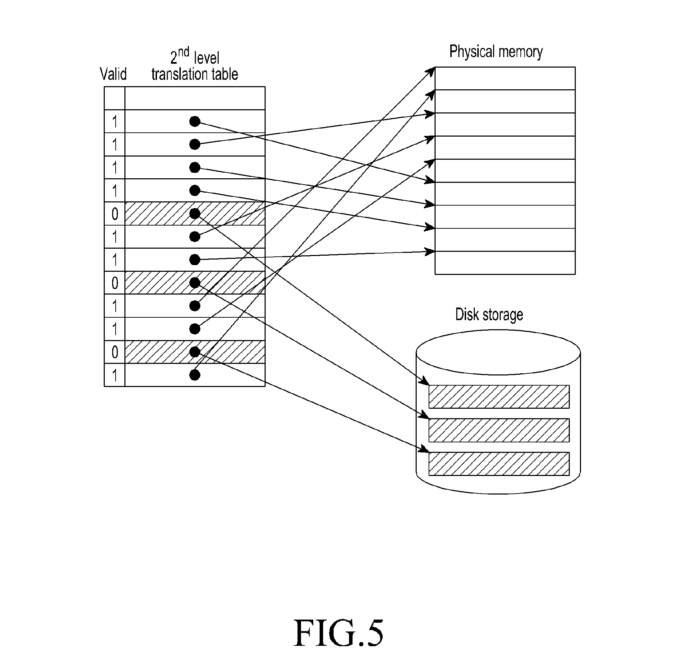

FIG. 5 is a diagram illustrating an operating of mapping data to a corresponding position to be stored, based on a value configured in a page table entry of a second level translation table according to an exemplary embodiment of the present invention.

Referring to FIG. 5, mapping is performed based on a value configured in the P field in each page table entry configuring the second level translation table. If the P field is set as "1", mapping is performed to a corresponding page in the main memory that stores data which a corresponding processor is to access. If the P field is set as "0", mapping is performed to a position of an auxiliary memory (disk storage) that stores data which a corresponding processor is to access. Accordingly, while the CPU performs address translation in order to translate a virtual address into a physical address based on the translation table, if the P field in a specific page table entry of the second level translation table is set as "0" as illustrated in FIG. 4A, a page fault exception is generated and the CPU provides an indication as to the generation of the page fault exception to the operating system. Then, the operating system operates an exception handler designated in advance to handle the generation of the page fault exception indicating that a page address of the main memory does not exist in a specific page table entry of the translation table.

The exception handler detects information on storage position of data stored in the available field 401 of the specific page table entry.

Based on the information on the storage position of the data stored in the available field 401, the exception handler may detect whether the data in which the page fault exception is generated is stored in the compressed page pool, which is a specific area in the main memory, or stored in the auxiliary memory. According to an exemplary embodiment of the present invention, the main memory is Dynamic Random-Access Memory (DRAM), and the compressed page pool, which is a specific area in the main memory, is a Random-Access Memory (RAM) disk of the main memory, which is not divided into pages. Further, in order to secure an available space of the main memory, the compressed page pool, which is a specific area in the main memory, stores data of a page selected as an object for swapping in the main memory in a compressed manner.

In step 101 of FIG. 1, the CPU determines whether the data in which the page fault exception is generated is stored in the compressed page pool.

If the CPU determines that the data in which the page fault exception is generated is stored in the compressed page pool, which is a specific area in the main memory, in step 102, then the CPU proceeds to step 103 in which the CPU reads and decompresses the data in the compressed page pool, and then performs a page-in operation in order to restore the decompressed data to an empty page of the main memory.

In addition, if the data is restored from the compressed page pool to the empty page of the main memory, the operating system detects a compression ratio of the data based on the decompression result of the data generated in step 103, and proceeds to step 104 in which the operating system records the compression ratio of the data on a page information data structure corresponding to the page to which the data is restored.

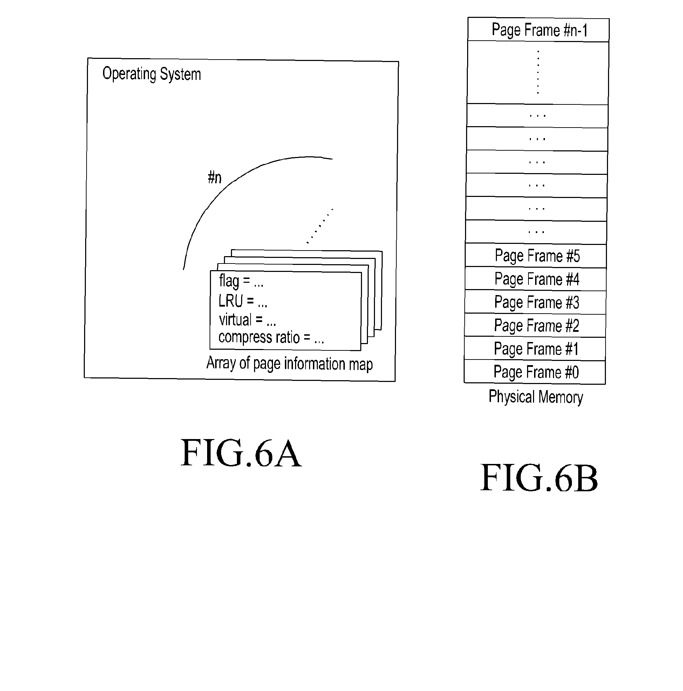

Referring to FIGS. 6A and 6B, in a page information data structure, the operating system includes a page information data structure that stores a current status of each page frame in a physical memory classified into the page frame. For example, as illustrated in FIG. 6B, if it is assumed that a physical memory has #n page frames, the operating system would have a page information data structure corresponding to page frames of Nos. #0 to #n-1 as illustrated in FIG. 6A.

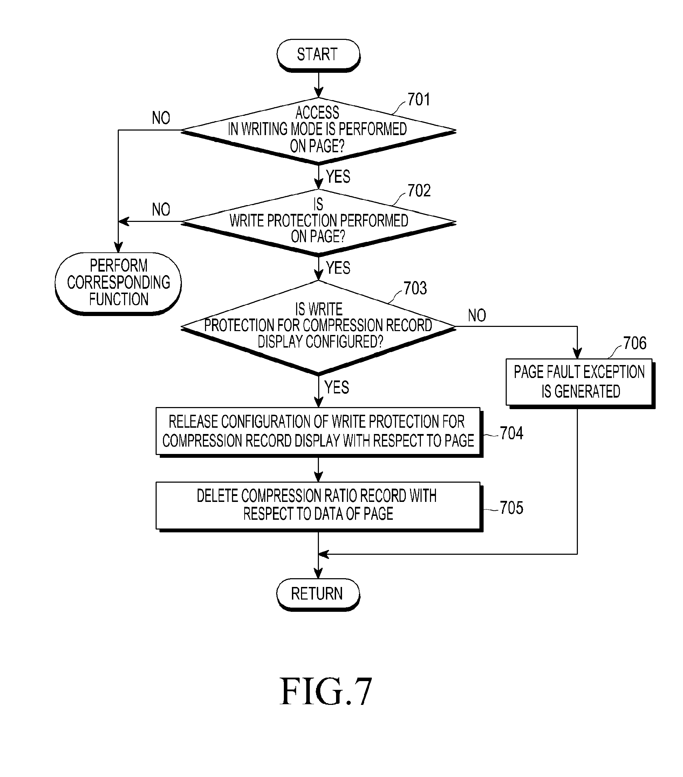

In addition, if the data is restored to the empty page of the main memory, the operating system sets the P field of the specific page table entry in which the page fault exception is generated as "1", records an address of the page frame to which the data is restored on a page address field, stores an address of a page frame to which the data is restored on the page address field, and proceeds to step 105 in which the operating system updates the page table and configures write-protection for compression ratio record display which is different from general write protection in a R/W field. The configuration of the write protection for the compression ratio record display may be written on the page information data structure corresponding to a page to which the data is restored. Because the data of the page in the main memory may be changed, by configuring the write-protection for the compression ratio record display with respect to the corresponding page, the compression ratio information may be reconfigured at the time of changing the data of the corresponding page. Thereafter, with reference to FIG. 7, a description is made of an operation of reconfiguring information on a compression ratio in a corresponding page in which the write-protection mode for the compression ratio record display is configured when an access to the corresponding page is performed in a writing mode.

In contrast, if the CPU determines that the data in which the page fault exception is generated is not stored in a compressed page pool in step 102, then the CPU proceeds to step 106 in which the CPU determines whether the data in which the page fault exception is generated is stored in an auxiliary memory.

If the exception handler is detected and the CPU determines that the data in which the page fault exception is generated is stored in the auxiliary memory in step 106, then the CPU proceeds to step 107 in which the CPU performs a page-in operation of reading the data from the auxiliary memory and restores the data to the empty page of the main memory.

In addition, if the data is restored from the auxiliary memory to the empty page of the main memory in step 107, then the operating system proceeds to step 108 in which the operating system records a compression ratio of the data as 0% in a page information data structure corresponding to a page to which the data is restored.

In order to secure an available space in the main memory, the auxiliary memory stores data on a page selected as an object for swapping. If most compression ratios are low, the data is paged out to the auxiliary memory. Therefore, if the page swapping to the auxiliary memory is generated, it is determined that the compression ratio is low. Therefore, the compression ratio is recorded as "0%". If the data which is paged out to the auxiliary memory is paged in and restored to an empty page of the main memory, the operating system sets the P field of the specific page table entry in which the page fault exception is generated as "1", records the address of the page frame to which the data is restored in the page address field, and proceeds to step 105 for configuring the write-protection for compression ratio record display, which is different from the general write protection, to the R/W field. The setting of the write-protection for compression ratio record display may be recorded in the page information data structure corresponding to the page to which the data is restored.

According to the processes of FIG. 1, the operating system may record a compression ratio with respect to the data of the page in the main memory in advance.

FIG. 7 is a flowchart illustrating a process of reconfiguring compression ratio information in a corresponding page in which write-protection is configured for compression ratio record display according to an exemplary embodiment of the present invention.

Referring to FIG. 7, the CPU determines whether an access in a writing mode to a specific page of the main memory is performed by the corresponding processor in step 701.

If the CPU detects the access in step 701, the CPU proceeds to step 702 in which the CPU determines whether write protection is performed on the page. For example, the CPU (e.g., the second level translation table) determines whether the write-protection is configured in the R/W field of the page table entry corresponding to the specific page.

If the write-protection is configured in the R/W field of the page table entry, the CPU determines the write-protection in step 702, and determines whether the write-protection configured in the R/W field is configured as the write protection for compression ratio record display. At this point, the R/W field may be set as "W" which configures the general write-protection, or may be set as "W1" which configures the write-protection for compression ratio record display.

Therefore, if the R/W field is configured as the write-protection for compression ratio record display, the CPU detects the configuration in step 703, and proceeds to step 704 in which the CPU releases the write-protection for compression ratio record display configured in the R/W field of the page table entry.

Thereafter, in step 705, the page information data structure corresponding to the corresponding page to which an access in a writing mode is performed deletes the compression ratio with respect to the recorded data of the page, and reconfigures the compression ratio of the page to be unknown. Therefore, the page may record new data through the writing mode.

However, if the general write-protection is configured in the R/W field, the CPU detects the configuration in step 503, and informs the configuration to the operating system. Then, the operating system proceeds to step 706 in which the page fault exception is generated in which the page fault exception indicates the authorization error through the corresponding exception handler.

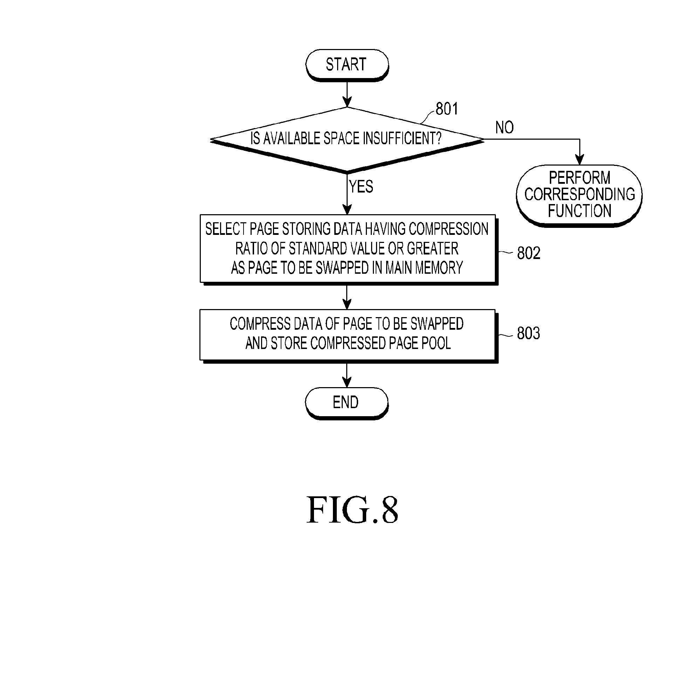

Otherwise, if an access in a writing mode with respect to the specific page of the main memory is performed, the CPU informs the access to the operating system. Then, the operating system detects the kind of the write-protection recorded in the page data structure corresponding to the specific page, and informs the CPU of whether the write-protection configured in the specific page is the write-protection for compression ratio record display or the general write-protection. By an operation of FIG. 1, after the compression ratio of the data stored in the page of the main memory is recorded in advance, when it is necessary to secure the available space in the main memory, an operation of selecting an object for page swapping is described with reference to FIG. 8.

FIG. 8 is a flowchart illustrating a process of selecting an object for page swapping in order to secure an available space in a main memory according to an exemplary embodiment of the present invention.

Referring to FIG. 8, in step 801, the operating system determines whether the available space is sufficient to record data. For example, if the main memory lacks an available space to record data, the operating system detects this in step 801, and the page information data structure as illustrated in FIG. 6A detects a certain number of pages in an order of low access frequency among the data stored in the page of the main memory based on Least Recently Used (LRU) information, in advance. In the LRU information, the order of the corresponding page according to the access frequency is recorded.

In addition, in step 802, the operating system detects a data compression ratio stored in each of the certain number of pages based on the compression ratio information in the page information data structure, and selects data of a page having a compression ratio of a standard value or greater (e.g., 50% or greater), from compression ratios of the data detected, as an object for page swapping. Thereafter, the operating system proceeds to step 803 in which the operating system compresses data of a page having a compression ratio of the standard value or greater (e.g., 50% or greater), and moves and stores the data to the compressed page pool of the main memory.

Therefore, in selecting an object for page swapping in order to secure an available space of the main memory, a page having a compression ratio of the standard value or lower may be skipped.

At this point, the operating system configures the P field as "0" in a page table entry corresponding to the data stored in the compressed page pool of the main memory, and an available field stores information on the storage position at which the data is stored in the compressed page pool to update the page table entry corresponding to the page.

In addition, when a plurality of units of data of the page having a compression ratio of 50% or greater exists, the operating system selects data of a corresponding page in an order of greater compression ratio until an available space of the memory is secured as an object for page swapping, and moves and stores the data to a compressed page pool of the main memory after compression.

If data of a page having a compression ratio of a standard value or greater (e.g., 50% or greater), among the compression ratios of data detected in step 802 does not exist, the operating system selects data having a lowest access frequency as an object for page swapping, and moves and stores the data to the auxiliary memory.

At this point, the operating system may set the P field as "0" in a page table entry corresponding to the data stored in the auxiliary memory, and records information on the storage position at which the data is stored in the auxiliary memory in the available field, so that the page table entry corresponding to the page is updated.

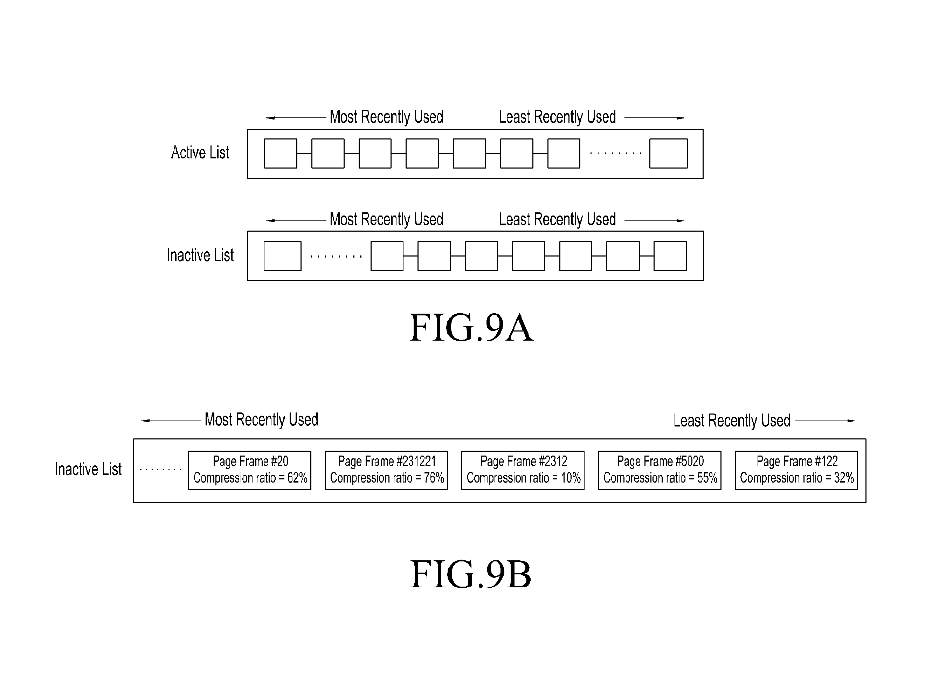

An example of an operation of FIG. 8 is described with reference to FIGS. 9A and 9B, as follows.

FIGS. 9A and 9B are diagrams illustrating a list presenting pages of a main memory according to an access frequency according to an exemplary embodiment of the present invention.

Referring to FIGS. 9A and 9B, using the LRU information in the page information data structure as illustrated in FIG. 6A, which is included in the operating system, the access frequency with respect to data of each page of the main memory may be detected. Accordingly, the operating system may present the pages of the main memory by the LRU information in the page information data structure according to the access frequency, as shown in the list of FIG. 9A. If the access frequency in a page at the last position of the "Active List" of FIG. 9A decreases, the page moves to the first position of the "Inactive List", and if the access frequency in a page positioned in the "Inactive List" increases, the page moves to the last position of the "Active List".

Accordingly, if an available space in the main memory is insufficient, by the LRU information in the data structure in the page information, the "Inactive List" with low access frequencies may be presented as illustrated in FIG. 9B. In addition, among the pages included in the "Inactive List", pages "#5020, #231221, #20" having a compression ratio of 50% or greater, which is a standard value, may be selected in sequence. Until an available space of the main memory is secured, corresponding data of the pages selected as objects for swapping is compressed in an order of higher compression ratio, and moved and stored to the compressed page pool of the main memory.

An exemplary embodiment of the present invention describes an example of detecting and recording a compression ratio of corresponding data when a page-in operation of restoring the data of a page which is paged out to a page of a main memory is performed.

Further, in a standby mode of the terminal with a memory (e.g., in an inactivated state of a memory when the terminal is powered on but the memory is not in use), the compression ratios which are detected by compressing the data stored in the page of the main memory may be recorded in advance.

Otherwise, the terminal may be provided with a separate hardware that can detect a compression ratio so that compression ratios detected by compressing data stored in the pages of the main memory can be recorded in advance.

The method of managing a memory according to exemplary embodiments of the present invention may be implemented by a computer-readable code on a non-transitory computer-readable recording medium. The non-transitory computer-readable recording medium may include all kinds of recording devices on which data that can be read by a computer system is recorded. An example of the recording medium may be Read-Only Memory (ROM), RAM, an optical disc, a magnetic tape, a floppy disc, a hard disk, a non-volatile memory, or the like. In addition, the non-transitory computer-readable recording medium may be dispersed in a computer system connected via network so that a computer-readable code may be stored and executed in a dispersed manner.

The following clauses are non-limiting examples of the present application:
Clause 1. A method of managing a memory, the method comprising:
   detecting and storing a compression ratio of restored data when data in which page swapping is generated is restored to the main memory; and
   securing space of the main memory by selecting a page having a compression ratio of a standard value or greater from pages of the main memory as an object for page swapping when the main memory has insufficient available space for recording data.
Clause 2. The method according to clause 1, wherein the storing of the compression ratio comprises:
   restoring specific data, in which the page swapping is generated to a main memory if a page fault exception, which indicates that a page address does not exist, is generated in a specific page table entry of a translation table during address translation.
Clause 3. The method according to clause 1, wherein the storing of the compression ratio comprises:
   recording a page information data structure corresponding to a page to which the data is restored based on a result of decompression when compressed data stored in a specific area of the main memory is decompressed and restored to an empty page of the main memory, and
   recording a compression ratio of the data as 0% on a page information data structure corresponding to the page to which the data is restored when compressed data stored in an auxiliary memory is restored to an empty page of the main memory.
Clause 4. The method according to clause 1, further comprising:
   performing an update that records a page address in which the data is restored to the page table entry recording data in which the page swapping is generated and configuring write protection for compression ratio record display after recording a compression ratio of the restored data.
Clause 5. The method according to clause 1, further comprising:
   storing new data recorded by a writing mode on the page by releasing a write-protection with respect to the page in the page table entry and deleting the recording of the compression ratio of the page from the page information data structure corresponding to the page, when an access in the writing mode with respect to a specific page of the main memory is performed, if writing protection for compression ratio record display is configured in a page table entry of a translation table on which an address of the specific page is recorded.
Clause 6. The method according to clause 1, wherein the securing of the space of the main memory comprises:
   detecting data compression ratios with respect to a certain number of pages having low access frequency based on a page information data structure storing current status information with respect to the pages of the main memory;
   selecting a page having a compression ratio of a threshold value or greater from the pages of the main memory as an object for page swapping; and
   compressing data of the page selected as an object for page swapping and storing the data in a specific area of the main memory.
Clause 7. The method according to clause 6, wherein the detecting of the data compression ratios comprises:
   detecting the certain number of pages having low access frequency from the main memory; and
   detecting data compression ratios with respect to the certain number of pages having low access frequency based on page information data structure storing current status information with respect to the pages of the main memory.
Clause 8. The method according to clause 6, wherein the detecting of the data compression ratios further comprises:
   compressing the data in an order of higher compression ratio until sufficient space of the main memory is secured and storing the data in the specific area of the main memory when a plurality of pages are selected as objects for page swapping.

The present invention has been described with reference to exemplary embodiments illustrated in the drawings, but it is obvious that the exemplary embodiments are merely examples, and various modifications and equivalent exemplary embodiments are possible, without departing from the scope of the present invention. Therefore, the scope of the present invention is not limited by the exemplary embodiments described herein, but the scope of the present invention shall be construed on the basis of the accompanying claims in such a manner that all of the technical ideas included within the scope equivalent to the claims belong to the present invention.

While the invention has been shown and described with reference to certain exemplary embodiments thereof, it will be understood by those skilled in the art that various changes in form and details may be made therein without departing from the scope of the invention as defined by the appended claims and their equivalents.

## Claims

1. A method of managing a memory, the method comprising:
recording a compression ratio of data stored in a page of a main memory;
and
securing space of the main memory when the main memory has insufficient available space, by compressing data of at least one page among pages of the main memory, wherein the at least one page has a compression ratio of a standard value or greater and storing the compressed data in the main memory.

2. The method according to claim 1, wherein the recording of the compression ratio comprises:
performing an address translation by translating a virtual address to a physical address by using a translation table in order to allocate pages of the main memory to a processor;
detecting a storage position of corresponding data in which a page fault exception is generated based on information of the storage position recorded in a specific page table if a page fault exception is generated which indicates that a page address does not exist in a specific page table entry of the translation table when performing the address translation;
recording a compression ratio according to a result of a decompression as a compression ratio of a corresponding page after decompression and restoration of the corresponding data read from a compressed page pool if corresponding data in which the page fault exception is generated is stored in the compressed page pool of the main memory; and
recording a compression ratio of the corresponding data as 0% after reading and restoring corresponding data from an auxiliary memory if corresponding data in which the page fault exception is generated is stored in the auxiliary memory.

3. The method according to claim 2, wherein the detecting of the storage position comprises:
generating the page fault exception which indicates that a page address does not exist if "0" is recorded in a Present field, P field, of the page table entry, and
detecting a storage position of corresponding data in which the page fault exception is generated, based on information on the storage position of corresponding data stored in an available field which is a remaining field of the page table entry if the page fault exception is generated.

4. The method according to claim 2 or 3, wherein the recording of the compression ratio according to the result of the decompression as the compression ratio of the corresponding page comprises:
restoring the corresponding data to an empty page of the main memory after reading and decompressing the corresponding data from the compressed page pool of the main memory;
detecting a compression ratio of the restored corresponding data based on the result of the decompression;
recording the detected compression ratio of the corresponding data to a page information data structure corresponding to the page of the main memory to which the corresponding data is restored; and
performing an update that records a page address to which the corresponding data is restored on the page table entry in which the page fault exception is generated and configuring write-protection for compression ratio record display.

5. The method according to claim 4, wherein
a number of the page information data structure corresponds to a number of pages configuring the main memory, and
the page information data structure records current status information with respect to a corresponding page.

6. The method according to any one of the claims 2-5, wherein the recording of the compression ratio of the corresponding data as 0% comprises:
reading the corresponding data from the auxiliary memory and restoring the data to an empty page of the main memory;
recording a compression ratio of the corresponding data as 0% in a page information data structure corresponding to the page of the main memory to which the corresponding data is restored; and
performing an update that records a page address to which the corresponding data is restored on the page table entry in which the page fault exception is generated and configuring write-protection for compression ratio record display.

7. The method according to any one of the previous claims, further comprising:
determining whether write-protection is configured in a page table entry of a translation table on which an address of the page is recorded if an access in a writing mode with respect to a page of the main memory is performed;
determining a kind of configured write-protection if write-protection is configured in the page table entry; and
storing new data recorded by the writing mode on the page by releasing the write-protection with respect to the page in the page table entry and deleting the recording of the compression ratio of the page from the page information data structure corresponding to the page if the kind of write-protection is write-protection for compression ratio record display with respect to the data of the page.

8. The method according to claim 7, further comprising:
generating a page fault exception indicating an authorization error if the kind of write-protection is write-protection with respect to the corresponding page.

9. The method according to any one of the previous claims, wherein the securing of the space of the main memory comprises:
detecting a compression ratio with respect to each of the pages of the main memory based on a page information data structure storing current status information with respect to the pages of the main memory;
selecting a page from the pages of the main memory, wherein the selected page has a compression ratio of a threshold value or greater; and
compressing data of the selected page and storing the data in a compressed page pool of the main memory.

10. The method according to claim 9, wherein the detecting of the compression ratio comprises:
detecting a certain number of pages having low access frequency in the main memory; and
detecting data compression ratios with respect to the certain number of pages having low access frequency based on page information data structure storing current status information with respect to the pages of the main memory.

11. The method according to claim 9, wherein the securing of the space of the main memory further comprises:
compressing the data in an order of higher compression ratio until available spaces of the main memory are secured if a plurality of pages are selected; and
storing the data in the compressed page pool of the main memory if a plurality of pages are selected.

12. A device for managing a memory that is arranged to
record a compression ratio of data stored in a page of a main memory;
and
secure space of the main memory when the main memory has insufficient available space, by compressing data of at least one page among pages of the main memory, wherein the at least one page has a compression ratio of a standard value or greater and storing the compressed data in the main memory.

13. The device according to claim 12, further comprising a Central Operating Unit, CPU, that is arranged to communicate with the operating system, wherein upon determination of data in which a page fault exception is generated is stored in a compressed page pool of the main memory, the CPU is further arranged to
read and decompress the data in the compressed page pool; and
restore the decompressed data to an empty page of the main memory.

14. The device according to claim 13, further arranged to
detect a compression ratio of the data based on the decompression result of the data generated; and
record the compression ratio of the data on a page information data structure corresponding to the page to which the data is restored.

15. Computer program medium comprising computer program instructions which, when executed on a computer device, cause the computer to execute a method according to any one of the claims 1-11.
